# EUROPEAN PATENT APPLICATION

(11) **EP 2 289 656 A1**
(43) Date of publication of application: **02.03.2011**
(21) Application number: 10008942.4
(22) Date of filing: 27.08.2010
(51) Int. Cl.: B23B 51/04

(54) **Adjustable depth hole saw assembly**

(30) Priority: 28.08.2009 US 237980 P
(71) Applicant: Combined Products Co. No. 1, Inc., Chicago, IL 60639 (US)
(72) Inventor: Kozak, Ira, Riverwoods Illinois 60015 (US)
(74) Representative: Schwanhäusser, Gernot

(57) **Abstract**

A hole saw cup member includes a tubular saw cup member (12) having a closed end arranged to be coupled to a rotary power source and an open end (20) arranged to detachably secure an annular cutting ring member (22). The invention includes at least one saw cup extension member (40) positioned between the saw cup member (12) and the annular cutting ring member (22) to lengthen the saw cup member to facilitate cutting of substrates having variable thickness.

## Description

### RELATED APPLICATIONS

This application claims priority to United States Provisional Application No. 61/237,980 filed on August 28, 2009 the entirety of which is incorporated herein by reference.

### FIELD OF THE INVENTION

The present invention relates to an adjustable hole saw assembly which permits the user to cut holes in several types of substrate materials with each substrate having various depths of thickness.

### BACKGROUND OF THE INVENTION

Hole saw assemblies are well known and used in drilling a hole of a desired size in a substrate material. These prior art hole saw assemblies include a tubular hole saw or saw cup member having a threaded opening in the proximal closed end structurally arranged to receive an arbor member which mounts a drill bit or pilot bit to the assembly to couple the assembly to a power source. The prior art tubular saw cup members include an integral cutting edge portion circumferentially extending about the open distal end of the tubular saw cup member.

Oftentimes the hole saw assembly user encounters a situation where the substrate material is of such a thickness that the depth of the substrate material exceeds the operability of the hole saw assembly. In such a situation, the user must maintain an inventory of saw cup members each having a different length to select the appropriate length saw cup member to properly engage and cut the various thicknesses of substrates encountered. This inventory of saw cup members represents a significant cost factor for the user of such prior art hole saw assemblies.

Additionally, when the hole saw assembly user encounters different types of substrate materials, such as fabrics, paper, wood, metal, plastics, marble, or granite, the cutting edge portion of the hole saw cup member must be appropriate to properly engage and cut the particular substrate material encountered. This requires the user to maintain an inventory of saw cup members, each having a different annular cutting edge that is appropriate to properly engage and cut the particular substrate material encountered. Again, this requires a significant cost outlay for the required hole saws, with each hole saw mounting a different annular cutting edge to properly engage the particular different type of substrate material encountered.

### SUMMARY

It is one object of the present invention to provide a hole saw assembly wherein the saw cup member is readily adjustable in length to properly cut different thicknesses of the encountered substrate material.

It is another object of the present invention to provide a hole saw assembly wherein the saw cup member is structurally arranged to mount various types of annular cutting edge members to engage and to cut a particular substrate material.

It is still another object of the present invention to provide at least one extension member which is positioned between the tubular saw cup member and the annular cutting edge member to properly cut various thicknesses of the encountered substrate material.

It is yet another object of the present invention to provide an adjustable saw cup member which permits the user to lengthen the saw cup member to cut through variable depths of substrate materials.

It is still a further object of the present invention to provide an adjustable saw cup member which is easy to assemble.

It is still another object of the present invention to provide a novel adjustable saw cup member which is fully engaged and locked together during the cutting operations.

These and other objects are achieved by the present invention which provides an adjustable hole saw assembly which permits the user to drill and to cut through different types of substrate materials having variable thicknesses. The adjustable hole saw assembly is comprised of a tubular bole saw or saw cup member having a threaded opening in the proximal closed end thereof which is structurally arranged to be engaged by the external threads of a tubular arbor member. The adjustable hole saw assembly includes an annular cutting edge or ring member secured to the distal open end of the saw cup member which engages and cuts through the particular substrate material encountered. The arbor member is structurally arranged to receive and mount a drill or pilot bit which extends beyond the annular cutting edge member secured to the distal open end of the saw cup member. The cutting edge member may include a collection of teeth of a uniform size and orientation or may include repetitive groups of teeth of different sizes and orientation. Thus, the operator may select and detachably mount different types of annular cutting edge members to the saw cup member to cut through the particular substrate encountered.

According to another embodiment of the present invention, the adjustable hole saw assembly may include at least one saw cup extension member positioned between the saw cup member and the annular cutting edge member and secured thereto. This structure permits the hole saw assembly to be readily adjustable in length to properly cut substrate materials having variable thicknesses without the costly expenditure of maintaining an inventory of different length saw cup members to properly engage and to cut the particular thickness of the substrate material encountered as well as to modify the saw cup member to permit cutting of different types of substrate encountered.

The invention consists of certain novel features and structural details hereinafter fully described, illustrated in the accompanying drawings, and particularly pointed out in the appended claims, it being understood that various changes in the details may be made without departing from the spirit, or sacrificing any of the advantages of the present invention.

### DESCRIPTION OF THE DRAWINGS

For the purpose of facilitating and understanding the present inventions, there is illustrated in the accompanying drawings preferred embodiments thereof, from an inspection of which, when considered in connection with the following description, the inventions, their construction and operation, and many of their advantages will be readily understood and appreciated.

FIG. 1 is a partial cross-sectional view of the hole saw assembly in accordance with the present invention;

FIG. 2 is a partial cross-sectional view of the one embodiment of the annular cutting ring member in accordance with the present invention;

FIG. 3 is a partial cross-sertional view of another embodiment of the annular cutting ring member in accordance with the present invention;

FIG. 4 is a partial cross-sectional view of another embodiment of the annular cutting ring member in accordance with the present invention;

FIG. 5 is a partial cross-sectional view of another embodiment of the hole saw assembly in accordance with the present invention;

FIG. 6 is a partial cross-sectional view of the hole saw assembly shown in FIG. 1 further including two extension members positioned between the saw cup member and the annular cutting ring member in accordance with another embodiment of the present invention;

FIG. 7 is a partial cross-sectional view of the hole saw assembly shown in FIG. 5 further including two extension members positioned between the saw cup member and the annular cutting ring member in accordance with still another embodiment of the present invention;

FIG. 8 is an exploded side-elevation view of the locking groove member positioned in the distal open end of the saw cup member in accordance with one embodiment of the present invention;

FIG. 9 is a partial cross-sectional view of the extension members illustrating that their outer diameter may be less than the outer diameter of the tubular saw cup member in accordance with the present invention;

FIG. 10 is an enlarged partial cross-sectional view of the hole saw assembly of FIG. 6 taken within the broken line detail "10-10" in accordance with one embodiment of the present invention; and

FIG. 11 is an enlarged partial cross-sectional view of the hole saw assembly of FIG. 6 taken within the broken line detail "11-11" in accordance with another embodiment of the present invention.

### DESCRIPTION OF THE PREFERRED EMBODIMENTS

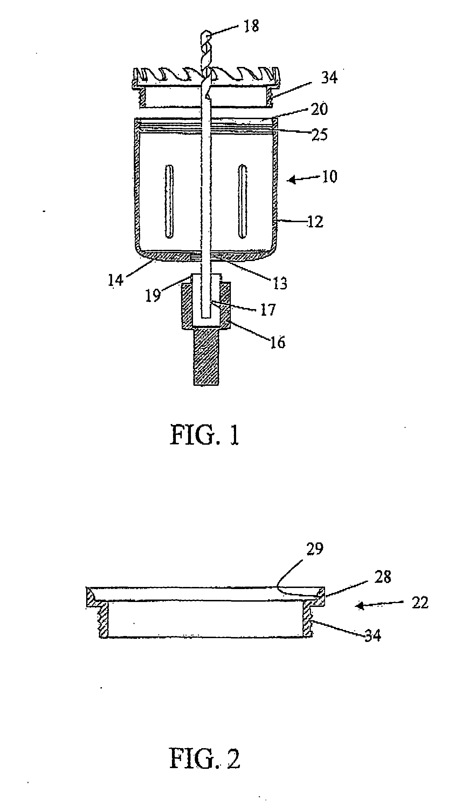

The detailed description of the present invention refers to the accompanying drawings wherein the same reference numbers have been used throughout the several views to designate the same or similar parts. Referring now to FIG. 1, there is shown a hole saw assembly 10, which includes a tubular saw cup member 12 having a threaded opening 13 in the proximal closed end 14 thereof. The proximal closed end 14 of the saw cup member 12 is structurally arranged to be engaged by a mandrel member 16 having a bore 17 therethrough and a threaded projection 19 thereon which secures the mandrel member to the saw cup member 12. A drill or pilot bit 18 is positioned in the bore of the mandrel member and secured thereto by a set screw 24 to couple the assembly to a drill or other power source (not shown). However, it is within the scope of the present invention that the drill or pilot bit may be secured by other techniques known to those skilled in the art. The pilot bit 18 centrally extends beyond the annular cutting ring member 22 to engage the substrate workpiece to thereby guide and maintain proper alignment of the saw cup member 12 during the beginning of the substrate cutting operation.

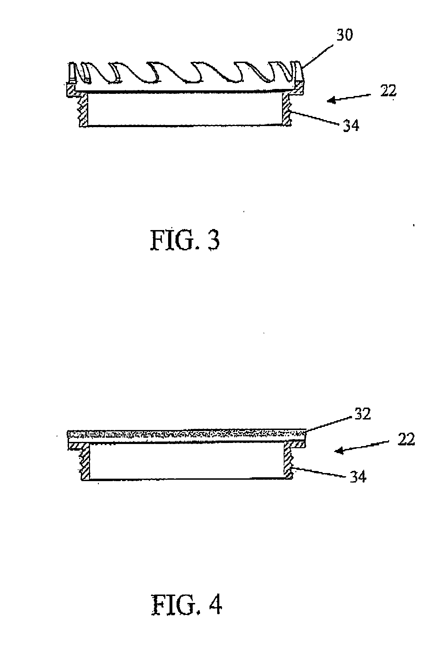

As shown in FIG. 1, the saw cup member 12 includes a distal open end 20 having a plurality of threads 25 within the distal open end. The threads 25 are designed to receive complementary threads mounted to an annular cutting edge ring or member 22. As shown in FIGS. 2-4, various types of annular cutting ring members 22 are illustrated, with FIG. 2 illustrating an annular cutting blade member 28 having an internal annular chamfer 29 for cutting paper and fabrics, with FIG. 3 illustrating an annular cutting tooth member 30 for cutting wood, metal, sheet metal and plastics, and with FIG. 4 illustrating an annular grit edge cutting member 32 for cutting marble and granite. In each of the annular cutting ring members 22, as shown in FIGS. 2-4, the ring members include reverse threads 34 which are engageable with the threads 25 positioned on to the distal open end 20 of the saw cup member 12. However, it is within the scope of the present invention that the cutting ring members may be composed of bi-metals and silicon carbide. Thus, during the cutting operation, the cutting ring member 22 is tightened onto the open end 20 of the saw cup member to secure the cutting ring member to the saw cup member 12.

In operation, when the hole saw assembly operator encounters a different type or texture of a substrate material, the operator may select the appropriate annular cutting member for easy attachment to the distal open end of the saw cup member to provide a hole saw assembly which properly engages and cuts different types of substrate materials encountered. This permits the operator to select and mount several types of annular cutting members to a single sized saw cup member 12 thereby eliminating the necessity of having each sized saw cup member integrally secured to a specific configured annular cutting ring member.

For example, if the operator of the hole saw assembly in accordance with the present invention encounters a wood substrate overlying a granite substrate, the operator would mount the annular cutting tooth member 30 by threading the member and the reverse threads 34 onto the threads 25 on the distal end 20 of the saw cup member 12 to engage and cut the wood substrate. The engagement and cutting of the substrate workpiece results from the kerf of the blade formed in the substrate workpiece which stabilizes the saw cup member during the cutting operation. When the cut through the wood substrate is completed, the operator unscrews the cutting tooth member 30 from the distal end 20 of the saw cup member 12 and replaces the annular cutting tooth member 30 with an annular grit edge cutting member 32 to engage and to cut the granite substrate workpiece. This results in a significant cost savings on the cost of saw cup members wherein each saw cup member has a permanently mounted annular cutting ring member mounted to the distal end 20. Additionally, when the annular cutting ring member becomes worn or damaged, the entire saw cup member does not need to be discarded. It is only necessary to replace the worn or damaged annular cutting ring member. Thus, the only consumable parts in the present invention are the annular cutting ring member and the pilot bit.

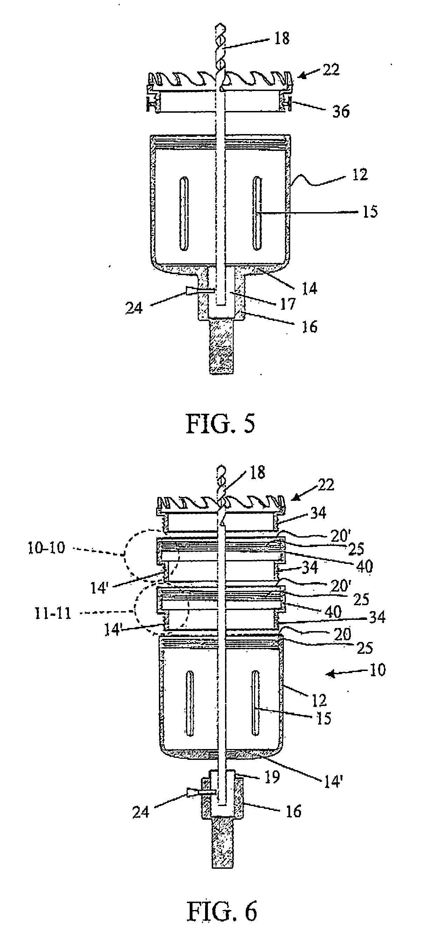

In FIG. 5, the hole saw assembly 10 is similar to the hole saw assembly shown in FIG. 1 except that the mandrel member 16 is welded to the proximal closed end 14 of the tubular saw cup member 12. The mandrel member 16 contains a bore 17 therein for mounting the drill or pilot bit 18 that extends beyond the annular cutting ring member 22 to engage the substrate workpiece and maintain proper alignment of the cup member on the substrate during the beginning of the cutting operation. The mandrel member 16 couples the saw cup assembly 10 to a drill or other power source (not shown), as is known in the art.

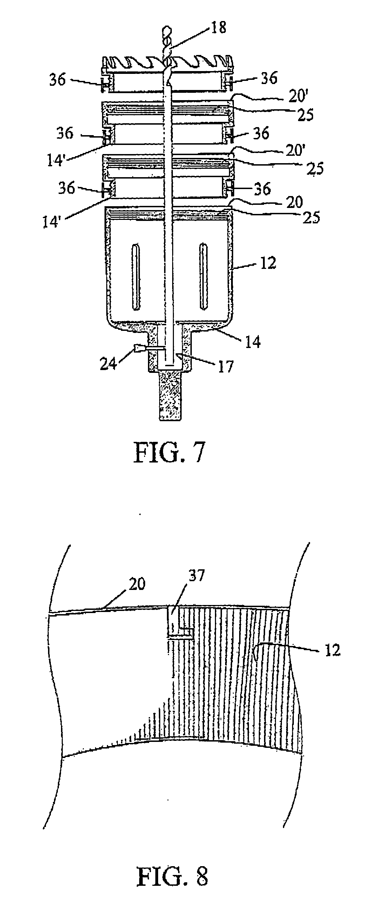

Additionally, in FIG. 5 and 7 the annular cutting ring member 22 is mounted to the distal open end 20 of the saw cup member 12 by a locking pin member 36 which is engageable with a groove 37 positioned in side wall 26 of the cup member at the distal open end of the saw cup member. When the locking member 36 engages the groove 37, as shown in FIG. 8, the annular cutting ring member 22 is locked to the saw cup member when the assembly is operated in the cutting direction to secure the cutting ring member to the saw cup member. Thus, when it is necessary for the operator to change or replace the annular cutting ring member with another type of cutting ring member for the embodiments described with respect to FIGS. 2-4, it is only necessary for the operator to unlock the cutting ring member by disengaging the locking pin member 36 from the groove 37 on the distal end of the L-shaped saw cup member. Again, the only consumable parts to the saw cup assembly of the present invention are the cutting ring member and the pilot bit.

FIGS. 6 and 7 illustrate a further embodiment of the present invention wherein the hole saw assembly may include at least one saw cup extension member 40 which is positioned between the annular cutting ring member 22 and the distal open end 20 of the saw cup member 12. As shown in FIGS. 6 and 7, two saw cup extension members 40 are provided to permit adjustment of the length of the saw cup member 12 to properly cut substrate materials having variable thicknesses. This eliminates the costly expenditure of maintaining an inventory of saw cup members each having a different length to properly engage and cut the particular thickness of the substrate encountered.

In FIG. 6, the saw cup extension members 40 include a distal open end 20 having a plurality of threads 25 and a proximal end 14 having threads 34 thereon which are engageable with either the annular cutting ring member 22 and the reverse threads 34 thereon or the threads 25 on the distal end 20 of either the extension member or members or the saw cup member. This permits the tightening of the annular cutting ring member 22 and the tightening of the extension members 40 to the open end 20 of the saw cup member during the rotation of the assembly while cutting the substrate. As shown in FIG. 6, the saw cup extension members 40 may be of the same length; however, it is within the scope of the present invention that the extension members 40 may be of different lengths to permit the operator to appropriately select the length of the saw cup member that engages and cuts the thickness of the substrate encountered.

As shown in FIG. 6, the hole saw assembly 10 includes a tubular saw cup member 12 which is identical to the hole saw assembly described in FIG. 1, supra. Thus, when the operator encounters a work piece substrate, having a thickness that exceeds the operability of the hole saw assembly, the operator may insert between the annular cutting ring member 22 and distal open end 20 of the saw cup member 12 one or more saw cup extension members 40 to obtain the appropriate length saw cup to properly engage and cut the work piece substrate encountered. Accordingly, the hole saw assembly is adjustable in length and provides a significant cost savings to the operator with the only consumable parts being the cutting ring member and the pilot bit.

In FIG. 7, the saw cup extension members 40 include a distal open end 20 having a plurality of groove members 3 7 and a proximal end 14 having locking pin members 3 6 extending therefrom which are engageable with one another to lock together the annular cutting ring member 22 and the extension member or members of the saw cup member. This permits the tightening of the assembly including the cutting ring member 20 and the extension members 40 during rotation of the assembly during the cutting operation. Again, it should be noted that in FIG. 7, the saw cup extension members 40 may be of the same length; however, it is within the scope of the present invention that the extension members 40 may be of different lengths to permit the operator to appropriately select the length of the saw cup member that engages and cuts the thickness of the substrate encountered.

As should be noted in FIG. 7, the hole saw assembly 10 includes a tubular saw cup member 12 which is identical to the hold saw assembly described in FIG. 5, supra. Thus, when the operator encounters a work piece substrate, having a thickness that exceeds the operability of the hole saw assembly, the operator may insert between the annular cutting ring member 22 and distal open end 20 of the saw cup member 12 one or more saw cup extension members 40 to obtain the appropriate length saw cup to properly engage and cut the work piece substrate encountered. Accordingly, the hole saw assembly is adjustable in length and provides a significant cost savings to the operator with the only consumable parts being the cutting ring member and the pilot bit.

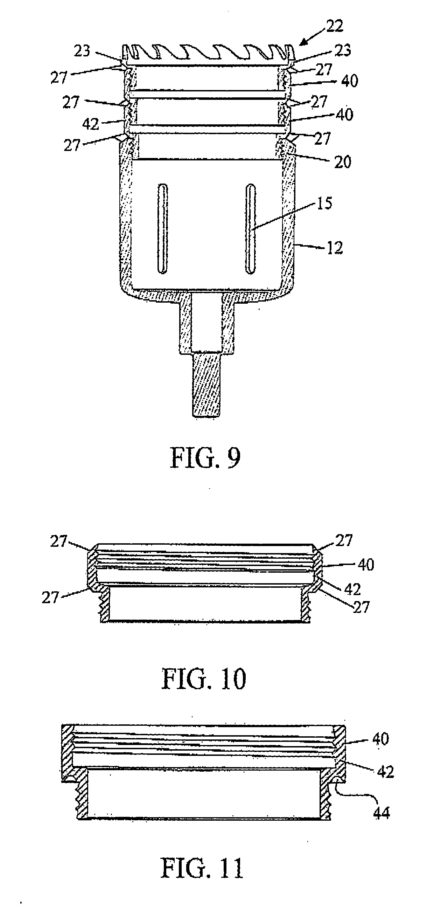

FIG. 9 illustrates a further embodiment of the present invention, as shown in FIGS. 1, 5 and 6. In FIGS. 9 and 10, the shoulder 23 on the cutting ring member 22 and the shoulder 42 on the extension members 40 both include a chamfer 27 therearound which permits the easy reversal of the cutting ring member 22 from the extension members 40. Also, the distal open end 20 of the saw cup member 12 includes a chamfer 27 therearound which permits the easy reversal and detachment of the cutting ring 22 from the distal end of the saw cup member 12. Such a structure prevents mating of the saw cup, the ring member and or the extension members and facilitates the easy detachment or uncoupling of the parts from one another.

FIG. 11 is a view similar to FIG. 10 wherein the shoulder 42 on the extension members 40 includes an undercut notch 44. The undercut notch 44 prevents mating of the several parts to one another and permits the easy detachment or uncoupling of the parts from one another.

Finally, it is within the scope of the present invention that the outer diameter of the annular cutting ring member 22 and the saw cup extension members may be less than the outer diameter of the tubular saw cup member to reduce the friction and heat during the cutting operation as well as permitting the cut debris to escape to provide longer life to the assembly and more rapid cutting by the assembly through the substrate material.

As is known in the art, the saw cup member may have fluted openings 15 to facilitate removal of the cut substrate from the hole saw assembly.

While there have been shown and described preferred embodiments of the present invention, it will be understood by those skilled in the art that various rearrangements and modifications may be made without departing from the spirit and scope of the present invention.

## Claims

1. A hole saw assembly, comprising:
a tubular saw cup member having a proximal closed end and a distal open end;
a mandrel engaged to the distal end of the tubular saw cup member;
a saw cup extension member detachably mounted to the distal open end of said tubular saw cup member; and,
a cutting ring member detachably mounted to the saw cup extension member.

2. The hole saw assembly of claim 1 wherein the cutting ring member is detachably mounted to the saw cup extension member by a plurality of threads on the cutting ring member adapted to receive complementary threads on the saw cup extension;

3. The hole saw assembly of claim 2 wherein said saw cup extension member is detachably mounted to the distal open end of said tubular saw cup member by a plurality of threads adapted to receive complementary threads on the saw cup extension member.

4. The hole saw assembly of claim 1 wherein the cutting ring member is detachably mounted to saw cup extension member by a locking pin member engaged with a groove on the tubular saw cup member.

5. The hole saw assembly of claim 4 wherein said saw cup extension member is detachably mounted to the distal open end of said tubular saw cup member by a locking pin member engaged with a groove on the tubular saw cup member.

6. The hole saw assembly of claim 1 wherein the cutting ring member is detachably mounted to saw cup extension member by a notch.

7. The hole saw assembly of claim 6 wherein said saw cup extension member is detachably mounted to the distal open end of said tubular saw cup member by a notch.

8. The hole saw assembly of claim 1 wherein the cutting ring member has a portion with a plurality of cutting tooth members and a diameter, the diameter being greater than a diameter of the tubular saw cup member.

9. A kit comprising:
a tubular saw cup member having a proximal closed end and a distal open end with a diameter;
a mandrel engaged to the distal end of the tubular saw cup member;
a first saw cup extension member to be detachably mounted to the distal open end of said tubular saw cup member; and,
a first cutting ring member to be detachably mounted to the saw cup extension member having a configuration for cutting a first material.

10. The kit of claim 9, further comprising a second cup extension member having a length different than a length of the first saw cup extension member.

11. The kit of claim 9, further comprising a second cutting ring member having a configuration to cut a second configuration for cutting a second material, the second configuration being different than the first configuration.

12. The kit of claim 9, further comprising a second cutting ring member having a portion with a diameter that is greater than the diameter of the tubular saw cup member.

13. The kit of claim 9, further comprising a second cutting ring member having a length being different than a length of the first cutting ring member.

14. A kit comprising:
a tubular saw cup member having a proximal closed end and a distal open end with a diameter;
a mandrel engaged to the distal end of the tubular saw cup member;
a first saw cup extension member to be detachably mounted to the distal open end of said tubular saw cup member; and,
a plurality of cutting ring members to be detachably mounted to the saw cup extension member, a first cutting ring member being different than a second cutting ring member.
